# EUROPÄISCHE PATENTSCHRIFT

(11) **EP 3 523 528 B1**
(45) Veröffentlichungstag und Bekanntmachung des Hinweises auf die Patenterteilung: **07.10.2020**
(21) Anmeldenummer: 17751736.4
(22) Anmeldetag: 10.08.2017
(51) Int. Cl.: F02D 41/00, F02D 41/24, F02D 41/28, F02D 41/14, F02D 13/02, F01L 13/00

(54) **VERFAHREN ZUR KOMBINIERTEN IDENTIFIZIERUNG EINER EINLASSVENTILHUB-PHASENDIFFERENZ UND EINER AUSLASSVENTILHUB-PHASENDIFFERENZ EINES VERBRENNUNGSMOTORS MIT HILFE VON LINIEN GLEICHER AMPLITUDE**
METHOD FOR THE COMBINED IDENTIFICATION OF AN INLET VALVE STROKE PHASE DIFFERENCE AND AN OUTLET VALVE STROKE PHASE DIFFERENCE OF AN INTERNAL COMBUSTION ENGINE WITH THE AID OF LINES OF THE SAME AMPLITUDE
PROCÉDÉ D'IDENTIFICATION COMBINÉE D'UN DÉCALAGE DE PHASE DE LA LEVÉE DES SOUPAPES D'ADMISSION ET D'UN DÉCALAGE DE PHASE DE LA LEVÉE DES SOUPAPES D'ÉCHAPPEMENT D'UN MOTEUR À COMBUSTION INTERNE À L'AIDE DE LIGNES DE MÊME AMPLITUDE

(30) Priorität: 10.10.2016 DE 102016219582
(43) Veröffentlichungstag der Anmeldung: 14.08.2019
(73) Patentinhaber: Vitesco Technologies GmbH, 30165 Hannover (DE)
(72) Erfinder: BRAUN, Tobias, 93152 Undorf (DE)
(74) Vertreter: Waldmann, Georg Alexander
(86) Internationale Anmeldenummer: PCT/EP2017/070315
(87) Internationale Veröffentlichungsnummer: WO 2018/068922

(56) Entgegenhaltungen:
- WO-A1-96/32579
- DE-A1-102015 209 665
- DE-B3-102012 212 860

## Beschreibung

Die vorliegende Erfindung betrifft ein Verfahren mit dem Phasendifferenzen des Ventilhubs der Einlassventile und der Auslassventile eines Hubkolben-Verbrennungsmotors im Betrieb kombiniert identifiziert werden können durch Auswertung von dynamischen Druckschwingungen der Ansaugluft, die im Luft-Ansaugtrakt gemessenen werden.

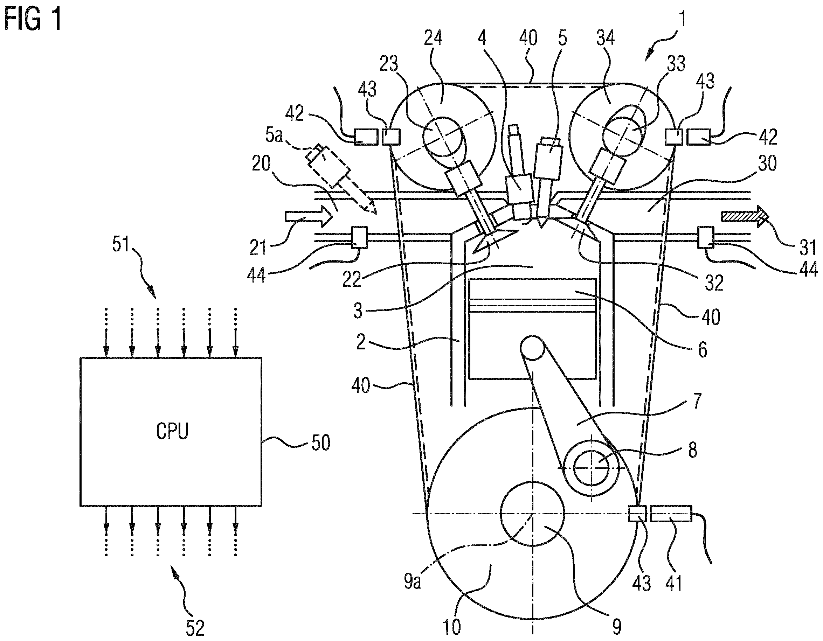

Hubkolben-Verbrennungsmotoren, die im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinders eines ggf. auch mehrzylindrigen Verbennungsmotors mit den wichtigsten Funktionseinheiten darstellt.

Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet und zum Antrieb des Hubkolbens 6 verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch oder auch nur Frischluft (bei Kraftstoff-Direkteinspritzung) aus dem Luft-Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines, zu einem Kraftstoff-Zuführsystem gehörenden, Einspritzventils 5 direkt in den Brennraum 3 eingespritzt. Im folgenden Arbeitstakt wird das Kraftstoff-Luft-Gemisch mittels einer Zündkerze 4 gezündet, expandierend verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas aus dem Brennraum 3 in den Abgas-Auslasstrakt 30 ausgeschoben.

Die Abgrenzung des Brennraumes 3 zum Luft-Ansaugtrakt 20 oder Abgas-Auslasstrakt 30 des Verbrennungsmotors erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und der Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

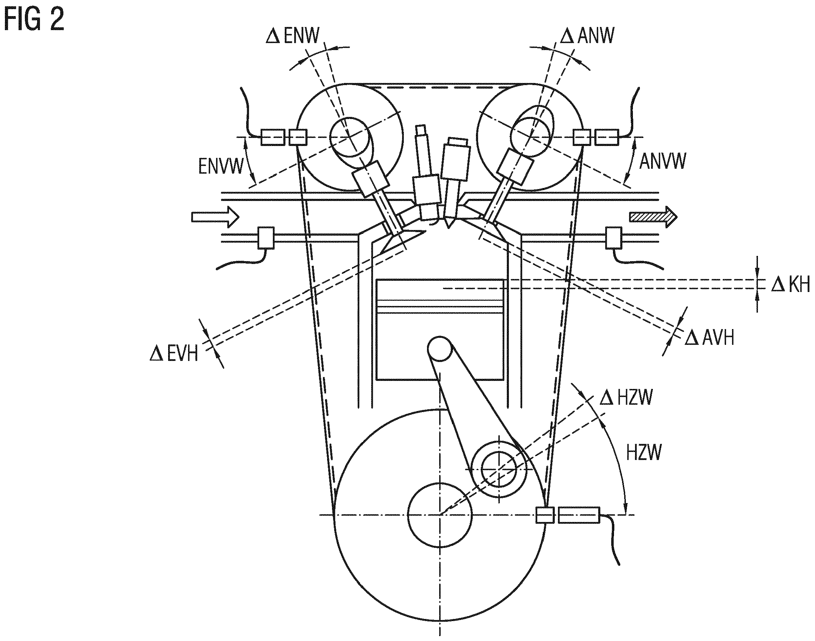

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle die jeweilige Arbeitsphase. Die jeweiligen Drehlagen und Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel HZW (Figur 2), ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassventilhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken. Diese sind als sogenannte Phasensteller bei sogenannten variablen Ventiltrieben bekannt.

Symbolisch ist auch ein elektronisches, programmierbares Motorsteuergerät 50 (CPU) dargestellt, das mit Signal-Eingängen zur Entgegennahme der vielfältigen Sensorsignale und mit Signal- und Leistungs-Ausgängen zur Ansteuerung entsprechender Stelleinheiten und Aktuatoren zur Steuerung der Motorfunktionen ausgestattet ist.

Für einen optimalen Betrieb des Verbrennungsmotors (bezüglich Emissionen, Verbrauch, Leistung, Laufruhe etc.) sollte die während des Ansaugtaktes in den Brennraum eingebrachte Frischgasladung bestmöglich bekannt sein, um die weiteren Parameter für die Verbrennung, wie zum Beispiel die zuzuführende, ggf. direkt eingespritzte Kraftstoffmenge darauf abstimmen zu können. Der sogenannte Ladungswechsel, also das Ansaugen von Frischgas und das Ausschieben des Abgases ist dabei in großem Maße abhängig von den Steuerzeiten der Einlassventile 22 und Auslassventile 32, also vom zeitlichen Verlauf der jeweiligen Ventilhübe in Bezug auf den zeitlichen Verlauf des Kolbenhubs. In anderen Worten ist der Ladungswechsel im Betrieb abhängig von den Phasenlagen der Ein- und Auslassventile in Relation zum Kurbelwellen-Phasenwinkel und somit zur Phasenlage des Hubkolbens.

Stand der Technik zur Ermittlung der Frischgasladung und zur Abstimmung der Steuerparameter des Verbrennungsmotors darauf, ist die Vermessung eines sogenannten Referenz-Verbrennungsmotors in allen auftretenden Betriebszuständen, zum Beispiel in Abhängigkeit von der Drehzahl, der Last, ggf. der durch Phasensteller vorgebbaren Ventilsteuerzeiten, ggf. den Betiebsparametern von Abgasturbolader oder Kompressor, etc. und die Speicherung von diesen Messwerten oder Derivaten davon oder von das Verhalten wiedergebenden Modellansätzen auf dem Motor-steuergerät eines entsprechenden Serien-Verbrennungsmotors. Alle baugleichen, in Serie produzierten Verbrennungsmotoren der gleichen Baureihe werden dann mit diesem erzeugten Referenz-datensatz betrieben.

Eine, zum Beispiel durch Fertigungstoleranzen verursachte, Abweichung der tatsächlichen Relativpositionen zwischen Einlass- und Auslassventilen und dem Kurbelwellen-Phasenwinkel bzw. der Hubkolbenposition eines Serien-Verbrennungsmotors in Bezug auf die idealen Referenzpositionen des Referenz-Verbrennungsmotors, also eine Phasendifferenz des Einlassventilhubs, des Auslassventilhubs und gegebenenfalls des Kolbenhubs in Bezug auf den durch den Kurbelwellen-Lagesensor vorgegebenen Phasenwinkel bzw. die Phasenlage der Kurbelwelle führt dazu, dass die tatsächlich angesaugte Frischgasladung von der als Referenz bestimmten Frischgasladung abweicht und somit die auf dem Referenz-Datensatz basierenden Steuerparameter nicht optimal sind. Beim Betrieb des Verbrennungsmotors können sich durch diese Fehler negative Auswirkungen bezüglich Emissionen, Verbrauch, Leistung, Laufruhe etc. ergeben.

Zur Veranschaulichung der an einem Serien-Verbrennungsmotor auftretenden möglichen Abweichungen und zur Definition der Benennung dieser Abweichungen im Weiteren wird Bezug genommen auf Figur 2, die den Verbrennungsmotor aus Figur 1 zeigt, in der jedoch, zur besseren Übersichtlichkeit die in Figur 1 dargestellten Bezugszeichen weggelassen sind und nur die entsprechenden Abweichungen bezeichnet sind.

Ausgehend von einer Referenzposition des an dem Kurbelwellen-Steueradapter 10 angeordneten Lagegeber 43, dessen Phasenwinkel von dem Kurbelwellen-Lagesensor 41 erfasst wird, ergeben sich mehrere Toleranzketten, die zu Abweichungen der Phasenlagen, im Folgenden auch als Phasendifferenzen bezeichnet, von Hubkolben 6, Einlassventilen 22 und Auslassventilen 32 gegenüber den idealen Referenz-Phasenlagen führen.

Dabei ergibt sich die Kolbenhub-Phasendifferenz ΔKH zum Beispiel aus einer Abweichung des Hubzapfenwinkels HZW, der sogenannten Hubzapfen-Winkeldifferenz ΔHZW, in Relation zur Referenzposition des Kurbelwellen-Lagesensors 41, und aus verschiedenen Maßtoleranzen (nicht dargestellt) von Pleuel 7 und Hubkolben 6.

Weiterhin ergibt sich die Einlassventilhub-Phasendifferenz ΔEVH zum Beispiel aus einer Abweichung der Nockenposition, der sogenannten Einlassnockenwellen-Winkeldifferenz ΔENW zusammen mit mechanischen Toleranzen (nicht dargestellt) des Einlassnockenwellen-Steueradapters 24 und des Steuergetriebes 40. Sofern ein Phasenversteller für die Einlassnockenwelle vorhanden ist, kommt ggf. noch ein Einlassnockenwellen-Verstellwinkel ENVW bzw. eine Abweichung dessen von der Vorgabe in Betracht.

In gleicher Weise ergibt sich die Auslassventilhub-Phasendifferenz ΔAVH zum Beispiel aus einer Abweichung der Nockenposition, der sogenannten Auslassnockenwellen-Winkeldifferenz ΔANW zusammen mit mechanischen Toleranzen (nicht dargestellt) des Auslassnockenwellen-Steueradapters 24 und des Steuergetriebes 40. Sofern ein Phasenversteller für die Auslassnockenwelle vorhanden ist, kommt ggf. noch ein Auslassnockenwellen-Verstellwinkel ANVW bzw. eine Abweichung dessen von der Vorgabe in Betracht.

Mögliche Ursachen für die beschriebenen Abweichungen können z.B. sein:
- Fertigungs- und/oder Montagetoleranzen der beteiligten mechanischen Komponenten, sowie
- Verschleißerscheinungen, wie z. B. eine Längung der Steuerkette oder des Zahnriemens, über die die Kurbelwelle und die Nockenwellen gekoppelt sind sowie
- Verformungserscheinungen elastisch oder plastisch durch hohe mechanische Belastungszustände.

Die bisherige Lösung des beschriebenen Problems, gemäß dem aktuellen Stand der Technik, liegt dabei prinzipiell in der Erfassung und in der Quantifizierung der auftretenden Abweichungen zwischen Referenz-Verbrennungsmotor und Serien-Verbrennungsmotor, um entsprechende Maßnahmen zur Korrektur oder Kompensation mittels Anpassung von Steuerungsparametern durchführen zu können.

Weiterhin wurde bisher versucht diesem Problem zu begegnen durch Minimierung von Fertigungs- und Montagetoleranzen. Ferner werden zum Beispiel die Steuerzeiten anhand Ventilhubstellung, Nockenkontur etc. am jeweiligen stehenden Serien-Verbrennungsmotor vermessen und der Verbrennungsmotor beim Zusammenbau entsprechend justiert.

Weiterhin arbeiten die meisten derzeit bekannten Systeme mit einem Bezugspunktsystem (Positions-Feedback). Hierbei wird an der Kurbelwelle sowie der Einlassnockenwelle und/oder der Auslassnockenwelle oder auch an dem jeweiligen Kurbelwellen-Steueradapter sowie dem Einlassnockenwellen-Steueradapter und/oder dem Auslassnockenwellen-Steueradapter oder auch an einem ggf. vorhandenen Phasensteller etc. jeweils eine Positionsmarke gesetzt, welche mit einem Sensor erfasst werden kann. Dadurch kann die relative Phasenlage zwischen der Kurbelwelle und der jeweiligen Einlassnockenwelle und/oder Auslassnockenwelle ermittelt und Abweichungen zu den angestrebten Referenzwerten identifiziert werden. Den unerwünschten Auswirkungen dieser Abweichungen kann dann durch eine Adaption oder Korrektur entsprechender Steuerparameter, in Abhängigkeit von den ermittelten Abweichungen, im Steuergerät entgegengewirkt werden.

Prinzipbedingt kann mit diesem Verfahren jedoch nur ein Teil der auftretenden Toleranzen erkannt werden. Beispielsweise ist es so nicht möglich, eine Winkelabweichung aufgrund einer Positionsabweichung der jeweiligen Positionsmarken selbst in Bezug auf die Nockenwellen oder eine Einlassnockenwellen-Winkeldifferenz ΔENW bzw. eine Auslassnockenwellen-Winkeldifferenz ΔANW in Bezug auf die jeweilige Referenzposition zu erkennen.

Weitere Verfahren, wie Auswertung des Klopfsensorsignals, Auswertung des Zylinderdrucksignals, sind ebenfalls bekannt.

Weiterhin ist aus der US 6, 804, 997 B1 eine Motorsteuervorrichtung zur Bestimmung der Phasenlage der Kurbelwelle durch Überwachung und Auswertung von Druckschwankungen im Ansaugtrackt bekannt. Die Steuervorrichtung ist so ausgebildet, dass sie Ansaugluftdruckschwankungen bestimmt, die ein Ansaugluftereignis und somit eine damit in Relation stehende Kurbelwellen-Phasenlage sowie deren entsprechende Periode des Motorzyklus anzeigen. Die Steuervorrichtung benutzt diese Informationen, um die Kurbelwellendrehzahl und die Phasenlage der Kurbelwelle zu ermitteln, um die Kraftstoffeinspritzung und das Zündverhalten des Motors zu steuern. Die Steuerzeiten der Einlass- und Auslassventile also ggf. Einlassventilhub-Phasendifferenzen und Auslassventilhub-Phasendifferenzen werden dabei nicht berücksichtigt und können das Ergebnis unter Umstanden erheblich beeinflussen.

Aus dem Dokument DE 10 2005 007 057 ist ein Regelungsverfahren für einen zu regelnden Drosselklappen-Luftstrom im Ansaugtrakt eines Verbrennungsmotors offenbart, wobei Druckpulsationen im Ansaugtrakt, die unter Anderem auch von den Ventilsteuerzeiten des Verbrennungsmotors beinflusst sind, bei der Regelung des Fluidstromes berücksichtigt werden. Dazu werden die Druckpulsationen mittels Fast-Fourier-Transformation analysiert und die Amplitudeninformation in einem Klirrfaktor zusammengefasst, der als eine zusätzliche Eingangsgröße zum Beispiel für ein mehrdimensionales mathematisches Regelungsmodell des Drosselklappen-Luftstromes herangezogen wird. Konkrete Rückschlüsse auf die Ventilsteuerzeiten, also auch ggf. vorhandene Einlassventilhub-Phasendifferenzen und Auslassventilhub-Phasendifferenzen des Verbrennungsmotors können mittels dieses Verfahrens nicht gezogen werden.

Aus Dokument DE 35 06 114 A1 ist ein Verfahren zur Steuerung oder Regelung einer Brennkraftmaschine bei der in Abhängigkeit von einer Betriebsgröße, die wenigstens einen Teil eines Schwingungsspektrums der Brennkraftmaschine als Information enthält, wie zum Beispiel Gasdrucksignalen, wenigstens eine Stellgröße der Brennkraftmaschine gesteuert wird. Dazu wird aus der erfassten Betriebsgröße durch diskrete Fourier-Transformation das in ihr enthaltene Betragsspektrum als Teil des Schwingungsspektrums ermittelt und als Messspektrum herangezogen und mit einem Bezugsspektrum verglichen. Die zu steuernde Stellgröße der Brennkraftmaschine wird dann in Abhängigkeit der Abweichung zwischen Meßspektrum und Bezugsspektrum gesteuert. Ein konkreter Rückschluss auf die Ventilsteuerzeiten und Kolbenhubposition des Verbrennungsmotors kann auch mit Hilfe dieses Verfahrens nicht einfach gezogen werden.

Dokument US 2009 0 312 932 A1 offenbart ein Verfahren zum Diagnostizieren der Verbrennung innerhalb eines Verbrennungsmotors, wobei aus der Kurbelwellen-Winkelgeschwindigkeit mittels einer Fast-Fourier-Transformation ein Verbrennungsphaseneinstellungswert erzeugt wird, dieser Wert mit einem erwarteten Verbrennungsphaseneinstellungswert verglichen wird und Differenzen dieser Werte identifiziert werden, die größer als eine zulässige Verbrennungsphaseneinstellungsdifferenz sind.

Eine ähnliche Vorgehensweise zur Ermittlung von Abweichungen zwischen Referenzmotor und Serienmotor wie zuvor beschrieben ist auch in Dokument US 2010 0 063 775 A1 offenbart.

Der vorliegenden Erfindung liegt die Aufgabe zugrunde, ein einfaches und kostengünstiges Verfahren der eingangs beschriebenen Art zur Verfügung zu stellen, mittels dem eine besonders genaue Identifizierung der tatsächlichen Phasenlagen der Einlassventile und der Auslassventile möglich ist, bzw. die Einlassventilhub-Phasendifferenz ΔEVH sowie die Auslassventilhub-Phasendifferenz ΔAVH im laufenden Betrieb des Verbrennungsmotors zuverlässig bestimmt werden kann.

Diese Aufgabe wird erfindungsgemäß durch ein Verfahren zur kombinierten Identifizierung einer Einlassventilhub-Phasendifferenz und einer Auslassventilhub-Phasendifferenz eines Zylinders eines Serien Verbrennungsmotors im Betrieb gemäß dem Hauptanspruch gelöst.

Ausführungsbeispiele und Weiterbildungen des erfindungsgemäßen Gegenstandes sind Gegenstand der Unteransprüche.

Gemäß dem erfindungsgemäßen Verfahren zur kombinierten Identifizierung einer Einlassventilhub-Phasendifferenz und einer Auslassventilhub-Phasendifferenz eines Zylinders eines Serien Verbrennungsmotors im Betrieb werden dem jeweiligen Zylinder zuordenbare dynamische Druckschwingungen der Ansaugluft im Luft-Ansaugtrakt und/oder des Abgases im Abgas-Auslasstrakt des betreffenden Serien-Verbrennungsmotors im Betrieb gemessen und daraus jeweils ein entsprechendes Druckschwingungssignal erzeugt. Gleichzeitig wird ein Kurbelwellen-Phasenwinkelsignal ermittelt. Aus dem Druckschwingungssignal werden mit Hilfe Diskreter-Fourier-Transformation die Amplituden ausgesuchter Signalfrequenzen der gemessenen Druckschwingungen in Bezug auf das Kurbelwellen-Phasenwinkelsignal ermittelt.

Weiterhin zeichnet sich das Verfahren durch die folgenden weiteren Schritte aus:
- Auf Basis der ermittelten Amplituden der jeweiligen ausgesuchten Signalfrequenzen, werden in Abhängigkeit von Einlassventilhub-Phasendifferenz und Auslassventilhub-Phasendifferenz stehende Linien gleicher Amplitude der ausgesuchten Signalfrequenzen ermittelt. Dies erfolgt mit Hilfe von in Referenzlinien-Kennfeldern gespeicherten oder mittels einer jeweiligen algebraischen Modell-Funktion ermittelten Referenzlinien der gleichen Amplitude;
- Ein gemeinsamer Schnittpunkt der ermittelten Linien gleicher Amplitude der ausgesuchten Signalfrequenzen wird ermittelt durch Projektion in eine gemeinsame, durch Einlassventilhub-Phasendifferenz und Auslassventilhub-Phasendifferenz aufgespannte Ebene;
- Die Einlassventilhub-Phasendifferenz und die Auslassventilhub-Phasendifferenz wird bestimmt aus dem ermittelten gemeinsamen Schnittpunkt der Linien gleicher Amplitude der ausgesuchten Signalfrequenzen.

Unter dem Begriff "Luft-Ansaugtrakt" oder auch einfach "Ansaugtrakt", "Ansaugsystem" oder "Einlasstrakt" eines Verbrennungsmotors fasst der Fachmann dabei alle Komponenten, die der Luftzuführung zu den jeweiligen Brennräumen der Zylinder dienen und somit den sogenannten Luftpfad definieren zusammen. Dazu können zum Beispiel ein Luftfilter, ein Ansaugrohr, Ansaugkrümmer oder Verteilerrohr oder kurz Saugrohr, ein Drosselklappenventil, sowie ggf. ein Verdichter und die Ansaugöffnung im Zylinder bzw. der Einlasskanal des Zylinders gehören.
Der Begriff "Abgas-Auslasstrakt" oder kurz "Abgastrakt" oder "Auslasstrakt" des Verbrennungsmotors kennzeichnet dagegen diejenigen Komponenten, die der kontrollierten Abführung des nach der Verbrennung aus den Brennräumen austretenden Abgases dienen.

Zur Analyse des Druckschwingungssignals, wird dieses einer Diskreten Fourier-Transformation (DFT) unterzogen. Dazu kann ein als Fast Fourier-Transformation (FFT) bekannter Algorithmus zur effizienten Berechnung der DFT herangezogen werden. Mittels DFT wird nun das Druckschwingungssignal in einzelne Signalfrequenzen zerlegt, die im Weiteren separat vereinfacht bezüglich ihrer Amplitude und der Phasenlage analysiert werden können.

Im vorliegenden Fall hat sich gezeigt, dass insbesondere die Amplitude ausgesuchter Signalfrequenzen des Druckschwingungssignals in Abhängigkeit stehen zu den in Relation zum Kurbelwellenwinkel stehenden Ventilsteuerzeiten des Verbrennungsmotors. Die Amplitude einer Signalfrequenz kennzeichnet dabei die relative Ausschlagshöhe des Signalfrequenzsignals in Bezug auf eine Mittellinie.

Das erfindungsgemäße Verfahren hat den Vorteil, dass ohne zusätzliche Sensorik die Phasenlagen, also die aktuellen Hubpositionen der Einlassventile und der Auslassventile des Verbrennungsmotors in Relation zum Kurbelwellen-Phasenwinkel und mit hoher Genauigkeit ermittelt werden können und so zur genauen Berechnung des Ladungswechselvorgangs und zur Abstimmung der Steuerungsparameter des Verbrennungsmotors herangezogen werden können.

In einer Ausführung des Verfahrens umfasst dieses die dem oben beschriebenen erfindungsgemäßen Verfahren vorausgehenden Schritte der Vermessung eines Referenz-Verbrennungsmotors zur Bestimmung von Referenzlinien gleicher Amplitude ausgesuchter Signalfrequenzen des Druckschwingungssignals der Ansaugluft im Luft-Ansaugtrakt- und/oder des Abgases im Abgas-Auslasstrakt in Abhängigkeit von Referenz-Einlassventilhub-Phasendifferenz und Referenz-Auslassventilhub-Phasendifferenz und der Speicherung der Referenzlinien gleicher Amplitude der ausgesuchten Signalfrequenzen des Druckschwingungssignals in Abhängigkeit von Referenz-Einlassventilhub-Phasendifferenz und Referenz-Auslassventilhub-Phasendifferenz in Referenzlinien-Kennfeldern. Auf diese Weise kann die Ermittlung der Einlassventilhub-Phasendifferenz und der Auslassventilhub-Phasendifferenz auf einfache Weise durchgeführt werden.

In vorteilhafter Weise können die oben genannten Referenzlinien-Kennfelder in einem Speicherbereich eines ohnehin vorhandenen Motor-Steuergerät des betreffenden Serien-Verbrennungsmotors gespeichert werden und stehen so im Betrieb des Serien-Verbrennungsmotors zur Anwendung im vorgenannten Verfahren unmittelbar zur Verfügung, ohne separate Speichermittel zu benötigen.

In weiter vorteilhafter Weise kann aus den, wie oben beschrieben ermittelten Referenzlinien-Kennfeldern der ausgesuchten Signalfrequenzen des Druckschwingungssignals für die jeweilige Signalfrequenz eine algebraische Modell-Funktion hergeleitet werden, die den Verlauf der jeweiligen Referenzlinien gleicher Amplitude der ausgesuchten Signalfrequenzen des Druckschwingungssignals in Abhängigkeit von Referenz-Einlassventilhub-Phasendifferenz sowie Referenz-Auslassventilhub-Phasendifferenz abbildet. Auf diese Weise wird eine mathematische Formulierung der Referenzlinien gleicher Amplitude zur Verfügung gestellt, die im weiteren Verfahren zur analytischen Ermittlung des gemeinsamen Schnittpunktes der Linien gleicher Amplitude und somit der Identifizierung der Einlassventilhub-Phasendifferenz und der Auslassventilhub-Phasendifferenz herangezogen werden kann.

In Weiterbildung der Erfindung können die wie zuvor beschrieben ermittelten algebraischen Modell-Funktionen für die ausgesuchten Signalfrequenzen in einem Speicherbereich eines Motor-Steuergeräts des betreffenden Serien-Verbrennungsmotors gespeichert werden. Auf diese Weise stehen die algebraischen Modell-Funktionen unmittelbar in der Steuerung zur Verfügung und können auf einfache Weise zur jeweils aktuellen Ermittlung der Linien gleicher Amplitude herangezogen werden. Es ist somit nicht erforderlich entsprechende Referenzlinien-Kennfelder im Speicher vorzuhalten, die große Datenmengen beinhalten und somit einen erhöhten Speicherplatzbedarf verursachen.

In einer weiteren Ausführung des erfindungsgemäßen Verfahrens, wird die Projektion der ermittelten Linien gleicher Amplitude in eine gemeinsame, durch Einlassventilhub-Phasendifferenz und Auslassventilhub-Phasendifferenz aufgespannte Ebene, zur Ermittlung eines gemeinsamen Schnittpunkts, auf der Basis entsprechender algebraischer Funktionen durchgeführt. Dazu werden die in dieser Patentanmeldung zur besseren Veranschaulichung des Verfahrens herangezogenen bildlichen Darstellungen in algebraische Funktionen bzw. Rechenoperationen umgesetzt. Dies ist besonders vorteilhaft bei der Ausführung des Verfahrens mittels einer elektronischen, programmierbaren Recheneinheit, wie beispielsweise einem entsprechenden Motor-Steuergerät (CPU), auf der die entsprechenden Rechenoperationen ausführbar sind.

Unter der oben genannten Voraussetzung kann das Verfahren auf einem elektronischen, programmierbaren Motor-Steuergerät des betreffenden Serien-Verbrennungsmotors ausgeführt werden. Dies hat den Vorteil, dass kein separates Steuer- oder Rechengerät erforderlich ist und die Algorithmen des Verfahrens in die entsprechenden Abläufe der Motor-Steuerprogramme eingebunden werden können.

In erweiterter Ausführung der Erfindung wird eine Anpassung von Steuergrößen oder Steuerroutinen, zum Beispiel die einzuspritzende Kraftstoffmasse, der Startzeitpunkt der Einspritzung, der Zündzeitpunkt, die Ansteuerung der Phasensteller der Nockenwellen, etc., im Sinne einer Korrektur der oder Anpassung an die ermittelte Einlassventilhub-Phasendifferenz und die ermittelte Auslassventilhub-Phasendifferenz in der Motorsteuerung vorgenommen. So ist es möglich den Verbrennungsvorgang auf die realen Gegebenheiten des jeweiligen Serien-Verbrennungsmotors zu optimieren und so den Kraftstoffbedarf und die Emissionswerte zu reduzieren.

In vorteilhafter Weise entsprechen zur Durchführung des erfindungsgemäßen Verfahrens die ausgesuchten Signalfrequenzen der Ansaugfrequenz als Grundfrequenz oder 1. Harmonische und den weiteren vielfachen, also der 2. bis X. der sogenannten "Harmonischen" der Ansaugfrequenz des Verbrennungsmotors.

Dabei steht die Ansaugfrequenz wiederum in eindeutigem Zusammenhang mit der Drehzahl des Verbrennungsmotors. Für diese ausgesuchten Signalfrequenzen wird dann, unter Heranziehung des parallel erfassten Kurbelwellen-Phasenwinkelsignals, die Amplitude der ausgesuchten Signalfrequenzen in Bezug auf den KurbelwellenPhasenwinkel ermittelt. Hierdurch ergeben sich besonders eindeutige und somit gut auszuwertende Ergebnisse bei der Ermittlung der Linien gleicher Amplitude, die so eine hohe Genauigkeit der Ergebnisse hervorbringt.

In weiter vorteilhafter Weise können die dynamischen Druckschwingungen der Ansaugluft im Luft-Ansaugtrakt mit Hilfe eines serienmäßigen, ohnehin bereits vorhandenen Drucksensors im Saugrohr gemessen werden. Dies hat den Vorteil, dass dazu kein zusätzlicher Sensor angeordnet werden muss und so keine Zusatzkosten zur Durchführung des erfindungsgemäßen Verfahrens verursacht werden.

Das zur Durchführung des erfindungsgemäßen Verfahrens erforderliche Kurbelwellen-Phasenwinkelsignal kann mit einem mit der Kurbelwelle verbundenen Zähnerad und einem Hall-Sensor ermittelt werden. Eine solche Sensoranordnung ist ebenfalls in modernen Verbrennungsmotoren zu anderen Zwecken bereits vorhanden. Das damit erzeugte Kurbelwellen-Phasenwinkelsignal kann in einfacher Weise von dem erfindungsgemäßen Verfahren mitbenutzt werden. Dies hat den Vorteil, dass kein zusätzlicher Sensor angeordnet werden muss und so keine Zusatzkosten zur Durchführung des erfindungsgemäßen Verfahrens verursacht werden.

Eine detaillierte Betrachtung der Zusammenhänge auf denen die Erfindung basiert erfolgt im Weiteren unter Zuhilfenahme der Figuren. Es zeigt:
- Fig. 1:: Eine vereinfachte Schemazeichnung eines Hubkolben-Verbrennungsmotors
- Fig. 2:: Die Schemazeichnung gemäß Fig. 1 mit Kennzeichnung der möglichen Lage- und Winkelabweichungen maßgeblicher Komponenten des Hubkolben-Verbrennungsmotors
- Fig. 3:: Zwei Dreidimensionale Diagramme zur Darstellung der Abhängigkeit der Amplitude (Amp_SF) zweier ausgesuchter Signalfrequenzen X und Y des im Luft-Ansaugtraktund/oder Abgas-Auslasstrakt gemessenen Druckschwingungssignals von der Einlassnockenwellen-Winkeldifferenz und der Auslassnockenwellen-Winkeldifferenz.
- Fig. 4:: Zwei zweidimensionale Diagramme zur Darstellung von Linien gleicher Amplitude für zwei ausgesuchte Signalfrequenzen X und Y des im Luft-Ansaugtrakt und/oder Abgas-Auslasstrakt gemessenen Druckschwingungssignals, projiziert in eine von der Einlassnockenwellen-Winkeldifferenz und der Auslassnockenwellen-Winkeldifferenz aufgespannte Ebene.
- Fig. 5:: Ein zweidimensionales Diagramm gemäß Fig. 4 mit eingezeichneten Linien gleicher Amplitude unterschiedlicher Signalfrequenzen für eine bestimmte Kombination von Einlassnockenwellen-Winkeldifferenz und der Auslassnockenwellen-Winkeldifferenz.
- Fig. 6:: Ein vereinfachtes Blockdiagramm zur Veranschaulichung des Verfahrensablaufs.

Die Erfindung beruht auf der folgenden Erkenntnis:
Bei Variation der Einlassventilhub-Phasendifferenz ΔEVH und der Auslassventilhub-Phasendifferenz ΔAVH an einem "idealen" Referenz-Verbrennungsmotors und der Analyse des Druckschwingungssignals der Ansaugluft im Luft-Ansaugtrakt oder des Abgases im Abgas-Auslasstrakt, im Folgenden kurz als Druckschwingungssignal bezeichnet, mittels diskreter Fourier-Analyse und der Betrachtung einzelner ausgesuchter Signalfrequenzen, die jeweils der Ansaugfrequenz oder einem Vielfachen der Ansaugfrequenz entsprachen, hat sich gezeigt, dass insbesondere die Amplituden der einzelnen ausgesuchten Signalfrequenzen, also die Ausschlaghöhe des Druckschwingungssignals in Bezug auf eine Mittellinie und das Kurbelwellen-Phasenwinkelsignal in Abhängigkeit stehen von der Einlassventilhub-Phasendifferenz ΔEVH und der Auslassventilhub-Phasendifferenz ΔAVH.

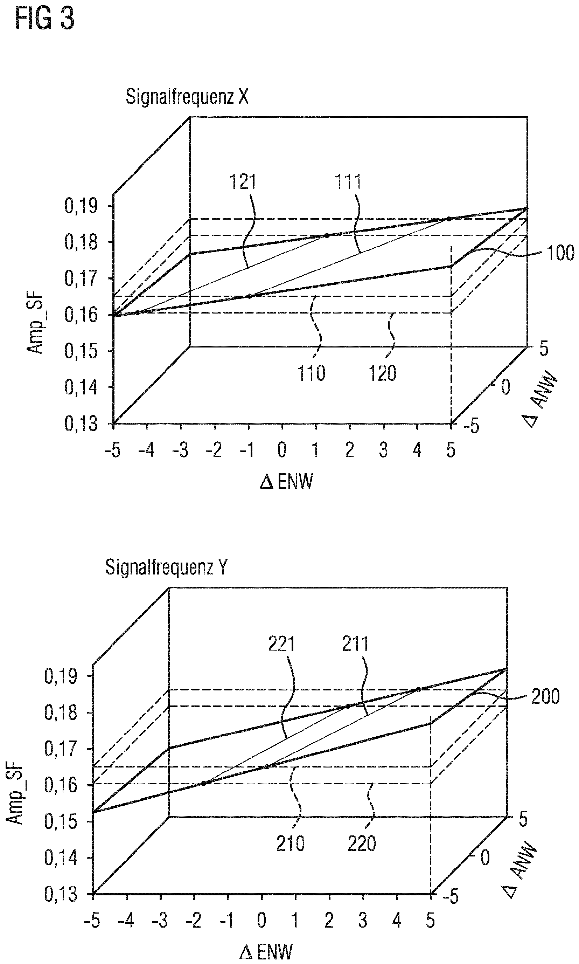

In Figur 3 ist diese Abhängigkeit für zwei unterschiedliche Signalfrequenzen, die Ansaugfrequenz, Signalfrequenz X, und die erste Harmonische, Signalfrequenz Y, dargestellt.

Zur Variation der Einlassventilhub-Phasendifferenz ΔEVH und der Auslassventilhub-Phasendifferenz ΔAVH wurde dazu mittels eines jeweiligen Phasenstellers die Einlassnockenwellen-Winkeldifferenz ΔENW und die Auslassnockenwellen-Winkeldifferenz ΔANW im Bereich zwischen -5° und +5° variiert und die jeweils zugehörige Amplitude der jeweiligen Signalfrequenz Amp_SF des Druckschwingungssignals senkrecht über der so aufgespannten ΔENW-ΔANW-Ebene aufgetragen. Bei idealen Verhältnissen besteht eine direkte und eindeutige Relation zwischen Einlassnockenwellen-Winkeldifferenz ΔENW und Einlassventilhub-Phasendifferenz ΔEVH sowie zwischen Auslassnockenwellen-Winkeldifferenz ΔANW und Auslassventilhub-Phasendifferenz ΔAVH. Für jede ausgesuchte Signalfrequenz ergibt sich so eine unterschiedlich geneigte "Amplituden-Fläche" 100, 200 in dem aufgespannten dreidimensionalen Raum. Legt man nun parallel zur ΔENW-ΔANW-Ebene liegende Schnittebenen 110, 120, 210, 220 in Höhe verschiedener Amplituden Amp_SF der jeweiligen Signalfrequenz, so ergeben sich jeweils Schnittlinien mit der jeweiligen "Amplituden-Fläche" 100, 200 die als Linie gleicher Amplitude bezeichnet werden. Das heißt für alle entlang einer solchen Linie gleicher Amplitude liegenden ΔENW-ΔANW-Kombinationen ergibt sich die gleiche Amplitude der ausgesuchten Frequenz des Druckschwingungssignals. Im Umkehrschluss heißt dies, dass einer ermittelten Amplitude einer Signalfrequenz des Druckschwingungssignals keine eindeutige ΔENW-ΔANW-Kombination zugewiesen werden kann.

In Figur 3 sind bei Signalfrequenz X die Phasen-Fläche 100 und beispielhaft zwei Schnittebenen 110, 120 bei Amplitude 0,165 und 0,160 eingezeichnet. Für Amplitude 0,165 ergibt sich die Linie gleicher Amplitude 111 und für Amplitude 0,160 ergibt sich die Linie gleicher Amplitude 121. Bei Signalfrequenz Y ist die Phasen-Fläche 200 und beispielhaft zwei Schnittebenen 210, 220 bei Amplitude 0,165 bzw. 0,160 eingezeichnet. Für Amplitude 0,165 ergibt sich die Linie gleicher Amplitude 211 und für Amplitude 0,160 ergibt sich die Linie gleicher Amplitude 221.

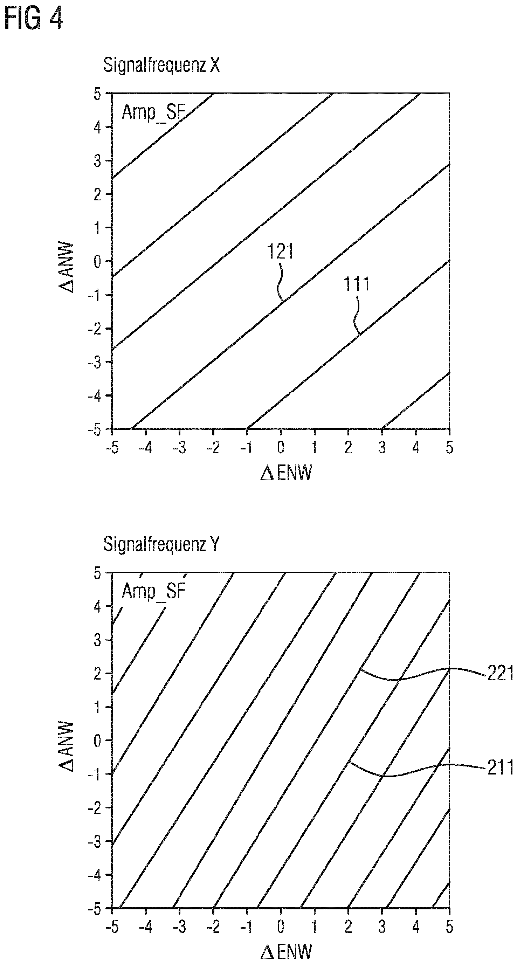

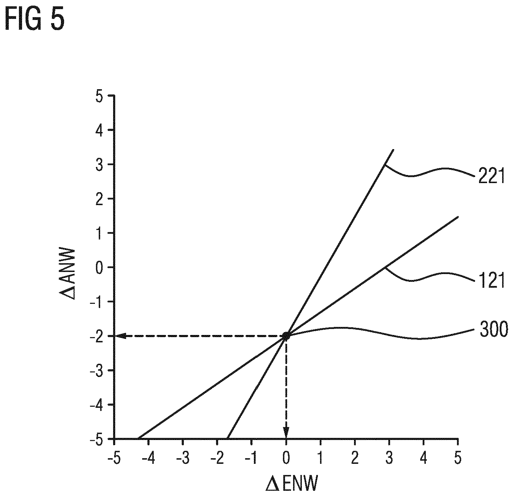

Zur weiteren Untersuchung der Zusammenhänge wurden nun die Linien gleicher Amplitude jeder ausgesuchten Signalfrequenz des Druckschwingungssignals in die ΔENW-ΔANW-Ebene projiziert. Dies ist in Figur 4 analog zur Figur 3 für Signalfrequenz X und Signalfrequenz Y getrennt dargestellt. Die entsprechenden Linien gleicher Amplitude 111, 121 für Siganlfrequenz X sowie 211, 221 für Signalfequenz Y sind auch in dieser Darstellung mit entsprechenden Bezugszeichen gekennzeichnet. Es zeigt sich, dass die Linien gleicher Amplitude der unterschiedlichen ausgesuchten Signalfrequenzen unterschiedliche Steigungen aufweisen. Projiziert man nun die Linien der gleichen Amplitude der unterschiedlichen ausgesuchten Signalfrequenzen in der ΔENW-ΔANW-Ebene übereinander, wie dies in Figur 5 anhand von Linien gleicher Amplitude 121 und 221 dargestellt ist, so zeigt sich, dass sich die Linien der gleichen Amplitude der unterschiedlichen Signalfrequenzen X und Y genau in einem Schnittpunkt 300 schneiden, der somit eine einzige ΔENW-ΔANW-Kombination repräsentiert. Da unter Zugrundelegung eines idealen Referenzmotors von einem unmittelbaren und unbeeinflussten Zusammenwirken der Einlassnockenwelle 23 mit den Einlassventilen 22 und der Auslassnockenwelle 33 mit den Auslassventilen 32 ausgegangen werden kann, also ein direkter und eindeutiger Zusammenhang besteht, kann einer Einlassnockenwellen-Winkeldifferenz ΔENW eine konkrete Einlassventilhub-Phasendifferenz ΔEVH und der Auslassnockenwellen-Winkeldifferenz ΔANW eine konkrete Auslassventilhub-Phasendifferenz ΔAVH zugeordnet werden.

Geht man also von sonst idealen Verhältnissen aus, so lässt sich durch Ermittlung der Amplitude von mindestens zwei ausgesuchten Signalfrequenzen des Druckschwingungssignals und unter Heranziehung und Überlagerung der bekannten Linien gleicher Amplitude der ermittelten Amplituden der jeweiligen Signalfrequenz, durch Projektion in eine gemeinsame ΔEVH-ΔAVH-Ebene, der einzigen Schnittpunkt der Linien gleicher Amplitude ermitteln und daraus der Wert der Einlassventilhub-Phasendifferenz ΔEVH und der Auslassventilhub-Phasendifferenz ΔAVH bestimmen. Bei dem in Figur 5 dargestellten Beispiel können so, ausgehend vom Schnittpunkt 300, entlang der gestrichelt eingezeichneten Pfeile eine Auslassnockenwellen-Winkeldifferenz ΔANW von -2° und eine Einlassnockenwellen-Winkeldifferenz ΔENW von 0° ermittelt werden.

Die in den Figuren 3 bis 5 graphisch dargestellten Zusammenhänge dienen der einfacheren Verständlichkeit der Grundlagen des Verfahrens. Selbstverständlich können diese Zusammenhänge auch anhand entsprechender algebraischer Formulierungen dargestellt und das Verfahren auf dieser Basis, mittels entsprechender Rechenoperationen und Programm-Algorithmen zum Beispiel auf einer programmierbaren digitalen Steuerungseinheit, ausgeführt werden. Dafür werden zum Beispiel zur Darstellung der Linien gleicher Amplitude entsprechende mathematisch-physikalische Modellfunktionen abgeleitet, die zur Ermittlung des gemeinsamen Schnittpunktes herangezogen werden können.

Die Erfindung des Verfahrens zur kombinierten Identifizierung einer Einlassventilhub-Phasendifferenz ΔEVH und einer Auslassventilhub-Phasendifferenz ΔAVH eines Verbrennungsmotors im Betrieb basiert auf den oben dargestellten Erkenntnissen und stellt sich demnach in einem Beispiel wie folgt dar:
Im Betrieb des Verbrennungsmotors werden laufend die dynamischen Druckschwingungen der Ansaugluft im Luft-Ansaugtrakt oder des Abgases im Abgas-Auslasstrakt oder auch in beiden Bereichen gemessen. Die jeweilige Messung ergibt ein Druckschwingungssignal. Gleichzeitig wird ein Kurbelwellen-Phasenwinkelsignal sensorisch erfasst. Das Druckschwingungssignal und das Kurbelwellen-Phasewinkelsignal werden über entsprechende Signaleingänge 51 einem Steuergerät 50 des Verbrennungsmotors 1 zugeführt. Im Steuergerät 50 wird das Druckschwingungssignal mittels dort hinterlegter Programm-Algorithmen einer Diskreten-Fourier-Transformation unterzogen und die jeweilige Amplitude ausgesuchter Signalfrequenzen, vorzugsweise der ersten und weiteren Harmonischen der Ansaugfrequenz des Verbrennungsmotors, der gemessenen Druckschwingungen in Bezug auf das Kurbelwellen-Phasenwinkelsignal ermittelt. In der Folge werden nun, für die einzelnen ausgesuchten Signalfrequenzen, auf Basis der jeweiligen Amplitude jeweils eine entsprechende Linie gleicher Amplitude ermittelt. Dies erfolgt jeweils entweder durch Auswahl einer Referenzlinie der gleichen Amplitude aus einem für die entsprechende Verbrennungsmotor-Serie typischen, in einem Speicherbereich des Steuergeräts 50 hinterlegten Referenzlinien-Kennfeld oder durch Berechnung mittels einer jeweiligen, für die entsprechende Verbrennungsmotor-Serie typischen, in einem Speicherbereich des Steuergeräts hinterlegten algebraischen Modell-Funktion und entsprechender Rechenoperationen und Programm-Algorithmen.

Die so ermittelten Linien gleicher Amplitude der einzelnen ausgesuchten Signalfrequenzen werden dann mittels entsprechender, im Steuergerät hinterlegter Programm-Algorithmen in eine gemeinsame aus Einlassventilhub-Phasendifferenz ΔEVH und Auslassventilhub-Phasendifferenz ΔAVH aufgespannte Ebene projiziert und so zu einem gemeinsamen Schnittpunkt gebracht. Aus der Lage dieses gemeinsamen Schnittpunktes in der aus Einlassventilhub-Phasendifferenz ΔEVH und Auslassventilhub-Phasendifferenz ΔAVH aufgespannten Ebene kann nun die Einlassventilhub-Phasendifferenz ΔEVH und Auslassventilhub-Phasendifferenz ΔAVH bestimmt werden.

Zur Durchführung des Verfahrens ist es erforderlich, dass spezifische Kennfelder mit Referenzlinien gleicher Amplitude oder entsprechende algebraische Modell-Funktionen zur Verfügung stehen. Diese sind abhängig von der Bauart und der konstruktiven Detailausführung der Baureihe/Serie eines Verbrennungsmotors und müssen deshalb an einem für die Serie typischen, baugleichen Referenz-Verbrennungsmotor ermittelt werden. Dazu wird an dem Referenz-Verbrennungsmotor das Druckschwingungssignal im Luft-Ansaugtrakt und/oder im Abgas-Auslasstrakt in möglichst vielen Betriebspunkten unter Variation der Einlassventilhub-Phasendifferenz ΔEVH und der Auslassventilhub-Phasendifferenz ΔAVH aufgenommen, einer Diskreten-Fourier-Transformation unterzogen und die Amplituden für die ausgesuchten Signalfrequenzen in Abhängigkeit von der Einlassventilhub-Phasendifferenz ΔEVH und der Auslassventilhub-Phasendifferenz ΔAVH abgespeichert. Dabei ist darauf zu achten, dass keine Kolbenhub-Phasendifferenz ΔKH die Ergebnisse überlagert bzw. diese verfälscht.

Auf Basis dieser so ermittelten dreidimensionalen Datenfelder können nun für die einzelnen ausgesuchten Signalfrequenzen die Linien gleicher Amplitude ermittelt und in entsprechende Kennfelder gespeichert werden, respektive die algebraischen Modell-Funktionen zur Berechnung der Linien gleicher Amplitude ermittelt werden.

Die so ermittelten Kennfelder und/oder Modellfunktionen werden dann in einem Speicherbereich eines Steuergeräts 50 jedes baugleichen Serien-Verbrennungsmotors hinterlegt und können zur Durchführung des erfindungsgemäßen Verfahrens herangezogen werden.

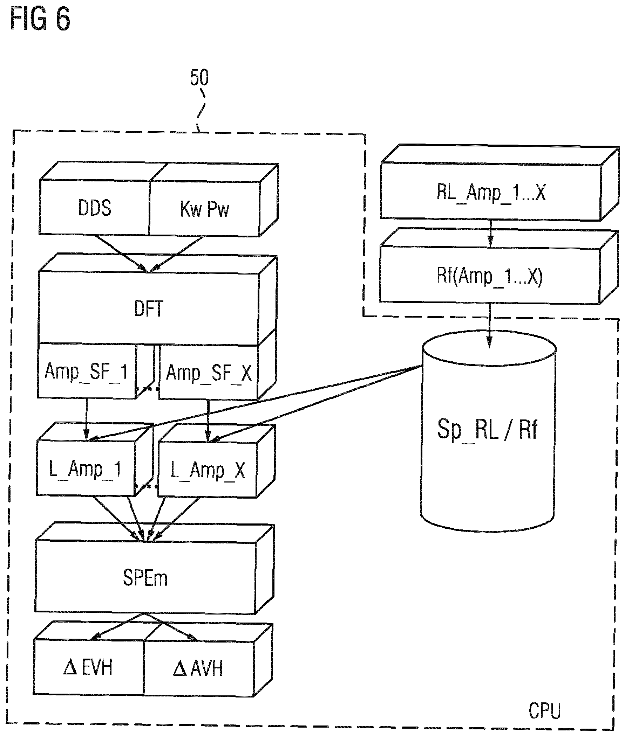

In Figur 6 ist eine Ausführung des erfindungsgemäßen Verfahrens zur kombinierten Identifizierung einer Einlassventilhub-Phasendifferenz ΔEVH und einer Auslassventilhub-Phasendifferenz ΔAVH eines Zylinders eines Serien Verbrennungsmotors 1 im Betrieb nochmals in Form eines vereinfachten Blockdiagrammes mit den wesentlichen Schritten dargestellt.
Zu Beginne werden dem jeweiligen Zylinder zuordenbare dynamische Druckschwingungen der Ansaugluft im Luft-Ansaugtrakt und/oder des Abgases im Abgas-Auslasstrakt des betreffenden Serien-Verbrennungsmotors im Betrieb gemessen und daraus ein entsprechendes Druckschwingungssignal erzeugt und es wird gleichzeitig ein Kurbelwellen-Phasenwinkelsignal ermittelt, was durch die parallel angeordneten, mit DDS (Dynamisches Druckschwingungssignal) und KwPw (Kurbelwellen-Phasenwinkel) gekennzeichneten Blöcke dargestellt ist.

Aus dem Druckschwingungssignal (DDS) wird dann mit Hilfe Diskreter-Fourier-Transformation (DFT) die Amplitude mehrerer ausgesuchter Signalfrequenzen (Amp_SF_1...Amp_SF_X) der gemessenen Druckschwingungen in Bezug auf das Kurbelwellen-Phasenwinkelsignal KwPw ermittelt, was durch die mit DFT (Diskrete-Fourier-Transformation) und Amp_SF_1 bis Amp_SF_X (Amplitude der jeweiligen Signalfrequenz) gekennzeichneten Blöcke dargestellt ist.

Auf Basis der ermittelten Amplituden Amp_SF_1...Amp_SF_X der jeweiligen ausgesuchten Signalfrequenz, wird dann je eine in Abhängigkeit von Einlassventilhub-Phasendifferenz und Auslassventilhub-Phasendifferenz stehende Linie gleicher Amplitude L_Amp_1...L_Amp_X der jeweils gleichen Signalfrequenz ermittelt, wie mittels der entsprechend gekennzeichneten Blöcke verdeutlicht wird. Dies geschieht mit Hilfe von in Referenzlinien-Kennfeldern gespeicherten oder mittels einer jeweiligen algebraischen Modell-Funktion ermittelten Referenzlinien der gleichen Amplitude RL-Amp_1... X der jeweiligen Signalfrequenz. Hierzu ist in dem Diagramm der Figur 6 ein mit Sp_RL/Rf gekennzeichneter Speicher dargestellt, aus dem die darin zur Verfügung gestellten Referenzlinien gleicher Amplitude RL_Amp_1...X oder auch entsprechende algebraische Modell-Funktionen Rf (Amp_1...X) zur Ermittlung dieser Linien abgerufen werden können.

Im Weiteren wird dann ein jeweiliger gemeinsamer Schnittpunkt der ermittelten Linien gleicher Amplitude L_Amp_1...L_Amp_X durch Projektion in eine gemeinsame, durch Einlassventilhub-Phasendifferenz und Auslassventilhub-Phasendifferenz aufgespannte Ebene ermittelt, was durch den mit SPEm (Schnittpunkt-Ermittlung) gekennzeichneten Block dargestellt ist.

Schließlich wird aus dem ermittelten Schnittpunkt der Linien gleicher Amplitude L_Amp_1...L_Amp_X der ausgesuchten Signalfrequenzen die Einlassventilhub-Phasendifferenz ΔEVH und die Auslassventilhub-Phasendifferenz ΔAVH bestimmt. Dies ist durch die in Figur 6 entsprechend gekennzeichneten Blöcke dargestellt.

Weiterhin zeigt Figur 6 die dem oben beschriebenen Verfahren vorausgehenden Schritte der Vermessung eines Referenz-Verbrennungsmotors zur Bestimmung von Referenzlinien gleicher Amplituden RL_Amp_1...X ausgesuchter Signalfrequenzen des Druckschwingungssignals im Luft-Ansaugtrakt und/oder des Abgases im Abgas-Auslasstrakt, in Abhängigkeit von Referenz-Einlassventilhub-Phasendifferenz und Referenz-Auslassventilhub-Phasendifferenz, sowie die Speicherung der Referenzlinien gleicher Amplituden der ausgesuchten Signalfrequenzen des Druckschwingungssignals jeweils in Abhängigkeit von Referenz-Einlassventilhub-Phasendifferenz und Referenz-Auslassventilhub-Phasendifferenz in Referenzlinien-Kennfeldern, was symbolisch durch dem mit RL_Amp_1...X bezeichneten Block dargestellt ist.

Der mit Rf (Amp_1...x) gekennzeichnete Block beinhaltet die Herleitung von algebraischen Modell-Funktionen, die als Referenzlinienfunktionen gleicher Amplitude Rf (Amp_1) ...Rf (Amp_X) den Verlauf der jeweiligen Referenzlinien gleicher Amplitude der ausgesuchten Signalfrequenzen des Druckschwingungssignals in Abhängigkeit von Referenz-Einlassventilhub-Phasendifferenz sowie Referenz-Auslassventilhub-Phasendifferenz abbilden, auf Basis der zuvor ermittelten Referenzlinien-Kennfelder.

Die Referenzlinien-Kennfelder bzw. Referenzlinienfunktionen gleicher Amplitude werden dann in einem Speicherbereich Sp_RL/Rf eines Motor-Steuergeräts 50, CPU, des betreffenden Serien-Verbrennungsmotors gespeichert, wo sie zur Durchführung des zuvor erläuterten erfindungsgemäßen Verfahrens zur Verfügung stehen.

Die im Blockdiagramm gestrichelt eingezeichnete Umrahmung der entsprechenden Blöcke, stellt symbolisch die Grenze eines elektronischen programmierbaren Motor-Steuergerät 50, CPU, des betreffenden Serien-Verbrennungsmotors dar, auf dem das Verfahren ausgeführt wird.

## Patentansprüche

1. Verfahren zur kombinierten Identifizierung einer Einlassventilhub-Phasendifferenz (ΔEVH) und einer Auslassventilhub-Phasendifferenz (ΔAVH) eines Zylinders (2) eines Serien Verbrennungsmotors im Betrieb, wobei
- dem Zylinder (2) zuordenbare dynamische Druckschwingungen der Ansaugluft im Luft-Ansaugtrakt (20) und/oder des Abgases (31) im Abgas-Auslasstrakt (30) des betreffenden Serien-Verbrennungsmotors im Betrieb gemessen werden und daraus ein entsprechendes Druckschwingungssignal erzeugt wird und wobei gleichzeitig ein Kurbelwellen-Phasenwinkelsignal (KwPw) ermittelt wird,
- wobei aus dem Druckschwingungssignal mit Hilfe Diskreter-Fourier-Transformation (DFT) die Amplituden ausgesuchter Signalfrequenzen (Amp_SF_1...Amp_SF_X) der gemessenen Druckschwingungen in Bezug auf das Kurbelwellen-Phasenwinkelsignal (KwPw) ermittelt werden, **gekennzeichnet durch** die folgenden weiteren Schritte:
- auf Basis der ermittelten Amplituden der jeweiligen ausgesuchten Signalfrequenzen (Amp_SF_1...Amp_SF_X), ermitteln von in Abhängigkeit von Einlassventilhub-Phasendifferenz (ΔEVH) und Auslassventilhub-Phasendifferenz (ΔAVH) stehenden Linien gleicher Amplituden (111, 121) der ausgesuchten Signalfrequenzen (Amp _SF_1...Amp_SF_X) mit Hilfe von in Referenzlinien-Kennfeldern gespeicherten oder mittels einer jeweiligen algebraischen Modell-Funktion ermittelten Referenzlinien der gleichen Amplituden (RL_Amp_1...X) ;
- Ermitteln eines gemeinsamen Schnittpunktes (300) der ermittelten Linien gleicher Amplituden (111, 121) der ausgesuchten Signalfrequenzen (Amp_SF_1...Amp_SF_X) durch Projektion in eine gemeinsame, durch Einlassventilhub-Phasendifferenz (ΔEVH) und Auslassventilhub-Phasendifferenz (ΔAVH) aufgespannte Ebene;
- Bestimmen der Einlassventilhub-Phasendifferenz (ΔEVH) und der Auslassventilhub-Phasendifferenz (ΔAVH) aus dem ermittelten gemeinsamen Schnittpunkt (300) der Linien gleicher Amplituden (111, 121) der ausgesuchten Signalfrequenzen (Amp_SF_1...Amp_SF_X).

2. Verfahren nach Anspruch 1, **dadurch gekennzeichnet, dass** es die folgenden vorausgehenden Schritte umfasst:
- Vermessung eines Referenz-Verbrennungsmotors zur Bestimmung von Referenzlinien gleicher Amplituden (RL_Amp_1...X) ausgesuchter Signalfrequenzen (Amp_SF_1...Amp_SF_X) des Druckschwingungssignals im Ein- und/oder Auslasstrakt in Abhängigkeit von Referenz-Einlassventilhub-Phasendifferenz und Referenz-Auslassventilhub-Phasendifferenz und
- Speicherung der Referenzlinien (Sp_RL/Rf) gleicher Amplituden der ausgesuchten Signalfrequenzen (RL_Amp_1...X) des Druckschwingungssignals in Abhängigkeit von Referenz-Einlassventilhub-Phasendifferenz und Referenz-Auslassventilhub-Phasendifferenz in Referenzlinien-Kennfeldern.

3. Verfahren nach Anspruch 2, **dadurch gekennzeichnet, dass** die Referenzlinien-Kennfelder in einem Speicherbereich (Sp_RL/Rf) eines Motor-Steuergeräts (50) des betreffenden Serien-Verbrennungsmotors gespeichert werden.

4. Verfahren nach Anspruch 2, **dadurch gekennzeichnet, dass** aus den Referenzlinien-Kennfeldern der ausgesuchten Signalfrequenzen (Amp_SF_1...Amp_SF_X) des Druckschwingungssignals für die jeweilige Signalfrequenz (Amp_SF_1...Amp_SF_X) eine algebraische Modell-Funktion (Rf (Amp_1)...Rf (Amp_X)) hergeleitet wird, die den Verlauf der jeweiligen Referenzlinien gleicher Amplituden (RL_Amp_1...X) der ausgesuchten Signalfrequenzen des Druckschwingungssignals in Abhängigkeit von Referenz-Einlassventilhub-Phasendifferenz sowie Referenz-Auslassventilhub-Phasendifferenz abbildet.

5. Verfahren nach Anspruch 4, **dadurch gekennzeichnet, dass** die algebraischen Modell-Funktionen (Rf (Amp_1)...Rf (Amp_X)) für die ausgesuchten Signalfrequenzen in einem Speicherbereich (SP_RL/Rf) eines Motor-Steuergeräts (50) des betreffenden Serien-Verbrennungsmotors gespeichert werden.

6. Verfahren nach einem der vorausgehenden Ansprüche, **dadurch gekennzeichnet, dass** die Projektion der Linien gleicher Amplituden (111, 121) in eine gemeinsame, durch Einlassventilhub-Phasendifferenz (ΔEVH) und Auslassventilhub-Phasendifferenz (ΔAVH) aufgespannte Ebene und die Ermittlung des gemeinsamen Schnittpunktes (300) dieser Linien, auf der Basis algebraischer Funktionen erfolgt.

7. Verfahren nach einem der Ansprüche 1 bis 6, **dadurch gekennzeichnet, dass** das Verfahren auf einem elektronischen programmierbaren Motor-Steuergerät (50) des betreffenden Serien-Verbrennungsmotors ausgeführt wird.

8. Verfahren nach Anspruch 7, **dadurch gekennzeichnet, dass** eine Anpassung von Steuergrößen oder Steuerroutinen im Sinne einer Korrektur der oder Anpassung an die ermittelte Einlassventilhub-Phasendifferenz (ΔEVH) und die ermittelte Auslassventilhub-Phasendifferenz (ΔAVH) auf dem Motor-Steuergerät (50) vorgenommen wird.

9. Verfahren nach einem der vorangehenden Ansprüche, **dadurch gekennzeichnet, dass** die ausgesuchten Signalfrequenzen (Amp_SF_1...Amp_SF_X) die Ansaugfrequenz und weitere vielfache der Ansaugfrequenz des Verbrennungsmotors beinhalten.

10. Verfahren nach einem der vorangehenden Ansprüche, **dadurch gekennzeichnet, dass** die dynamischen Druckschwingungen der Ansaugluft mit Hilfe eines serienmäßigen Drucksensors (44) im Saugrohr des Luft-Ansaugtraktes (20) gemessen werden.

11. Verfahren nach einem der vorangehenden Ansprüche, **dadurch gekennzeichnet, dass** das Kurbelwellen-Phasenwinkelsignal (KwPw) mit einem mit der Kurbelwelle (9) verbundenen Zähnerad und einem Hall-Sensor ermittelt wird.

## Claims

1. Method for the combined identification of an inlet valve stroke phase difference (ΔEVH) and an outlet valve stroke phase difference (ΔAVH) of a cylinder (2) of a series-production internal combustion engine during operation, wherein
- dynamic pressure oscillations, assignable to the cylinder (2), of the intake air in the air intake tract (20) and/or of the exhaust gas (31) in the exhaust-gas outlet tract (30) of the respective series-production internal combustion engine are measured during operation and a corresponding pressure oscillation signal is generated from these, and wherein a crankshaft phase angle signal (KwPw) is determined at the same time,
- wherein, from the pressure oscillation signal, using discrete Fourier transformation (DFT), the amplitudes of selected signal frequencies (Amp_SF_1...Amp_SF_X) of the measured pressure oscillations in relation to the crankshaft phase angle signal (KwPw) are determined, **characterized by** the following further steps:
- on the basis of the determined amplitudes of the respective selected signal frequencies (Amp_SF_1...Amp_SF_X), determining lines of equal amplitudes (111, 121) of the selected signal frequencies (Amp_SF_1...Amp_SF_X), which lines are dependent on inlet valve stroke phase difference (ΔEVH) and outlet valve stroke phase difference (ΔAVH), using reference lines of equal amplitudes (RL_Amp_1...X), which reference lines are stored in reference line characteristic maps or determined by means of a respective algebraic model function;
- determining a common intersection point (300) of the determined lines of equal amplitudes (111, 121) of the selected signal frequencies (Amp_SF_1...Amp_SF_X) by projection into a common plane spanned by inlet valve stroke phase difference (ΔEVH) and outlet valve stroke phase difference (ΔAVH);
- determining the inlet valve stroke phase difference (ΔEVH) and the outlet valve stroke phase difference (ΔAVH) from the determined common intersection point (300) of the lines of equal amplitudes (111, 121) of the selected signal frequencies (Amp_SF_1...Amp_SF_X).

2. Method according to Claim 1, **characterized in that** said method comprises the following preceding steps:
- performing measurement of a reference internal combustion engine in order to determine reference lines of equal amplitudes (RL_Amp_1...X) of selected signal frequencies (Amp_SF_1...Amp_SF_X) of the pressure oscillation signal in the inlet and/or outlet tract in a manner dependent on reference inlet valve stroke phase difference and reference outlet valve stroke phase difference, and
- storing the reference lines (Sp_RL/Rf) of equal amplitudes of the selected signal frequencies (RL_Amp_1...X) of the pressure oscillation signal in a manner dependent on reference inlet valve stroke phase difference and reference outlet valve stroke phase difference in reference line characteristic maps.

3. Method according to Claim 2, **characterized in that** the reference line characteristic maps are stored in a memory area (Sp_RL/Rf) of an engine control unit (50) of the respective series-production internal combustion engine.

4. Method according to Claim 2, **characterized in that**, from the reference line characteristic maps of the selected signal frequencies (Amp_SF_1...Amp_SF_X) of the pressure oscillation signal, for the respective signal frequency (Amp_SF_1...Amp_SF_X), an algebraic model function (Rf (Amp_1)...Rf (Amp_X)) is derived which replicates the profile of the respective reference lines of equal amplitudes (RL_Amp_1...X) of the selected signal frequencies of the pressure oscillation signal in a manner dependent on reference inlet valve stroke phase difference and reference outlet valve stroke phase difference.

5. Method according to Claim 4, **characterized in that** the algebraic model functions (Rf(Amp_1)...Rf (Amp_X)) for the selected signal frequencies are stored in a memory area (SP_RL/Rf) of an engine control unit (50) of the respective series-production internal combustion engine.

6. Method according to any of the preceding claims, **characterized in that** the projection of the lines of equal amplitudes (111, 121) into a common plane spanned by inlet valve stroke phase difference (ΔEVH) and outlet valve stroke phase difference (ΔAVH), and the determination of the common intersection point (300) of these lines, is performed on the basis of algebraic functions.

7. Method according to one of Claims 1 to 6, **characterized in that** the method is executed on an electronic programmable engine control unit (50) of the respective series-production internal combustion engine.

8. Method according to Claim 7, **characterized in that** an adaptation of control variables or control routines in the context of a correction of or adaptation to the determined inlet valve stroke phase difference (ΔEVH) and the determined outlet valve stroke phase difference (ΔAVH) is performed on the engine control unit (50).

9. Method according to any of the preceding claims, **characterized in that** the selected signal frequencies (Amp_SF_1...Amp_SF_X) include the intake frequency and further multiples of the intake frequency of the internal combustion engine.

10. Method according to any of the preceding claims, **characterized in that** the dynamic pressure oscillations of the intake air are measured by means of a series-production-type pressure sensor (44) in the intake pipe of the air intake tract (20) .

11. Method according to any of the preceding claims, **characterized in that** the crankshaft phase angle signal (KwPw) is determined by means of a toothed gear connected to the crankshaft (9) and by means of a Hall sensor.

## Revendications

1. Procédé d'identification combinée d'une différence de phase de levée de soupape d'admission (ΔEVH) et d'une différence de phase de levée de soupape d'échappement (ΔAVH) d'un cylindre (2) d'un moteur à combustion interne de série lors du fonctionnement, dans lequel
- des pulsations de pression dynamiques, pouvant être associées au cylindre (2), de l'air d'admission dans le système d'admission d'air (20) et/ou du gaz d'échappement (31) dans le système d'échappement de gaz d'échappement (30) du moteur à combustion interne de série concerné sont mesurées lors du fonctionnement et, à partir de cette mesure, un signal de pulsations de pression correspondant est généré, et dans lequel un signal d'angle de phase de vilebrequin (KwPw) est déterminé simultanément,
- dans lequel les amplitudes de fréquences de signal sélectionnées (Amp_SF_1...Amp_SF_X) des pulsations de pression mesurées par rapport au signal d'angle de phase de vilebrequin (KwPw) sont mesurées à partir du signal de pulsations de pression à l'aide d'une transformée de Fourier discrète (DFT), **caractérisé par** les autres étapes suivantes :
- sur la base des amplitudes déterminées des fréquences de signal sélectionnées respectives (Amp_SF_1...Amp_SF_X), détermination de lignes de mêmes amplitudes (111, 121) des fréquences de signal sélectionnées (Amp_SF_1...Amp_SF_X), lesquelles lignes dépendent d'une différence de phase de levée de soupape d'admission (ΔEVH) et d'une différence de phase de levée de soupape d'échappement (ΔAVH), à l'aide de lignes de référence de mêmes amplitudes (RL_Amp_1...X) mémorisées dans des cartographies de lignes de référence ou déterminées à l'aide d'une fonction de modèle algébrique respective ;
- détermination d'un point d'intersection commun (300) des lignes déterminées de mêmes amplitudes (111, 121) des fréquences de signal sélectionnées (Amp_SF_1...Amp_SF_X) par projection dans un plan commun défini par la différence de phase de levée de soupape d'admission (ΔEVH) et la différence de phase de levée de soupape d'échappement (ΔAVH) ;
- détermination de la différence de phase de levée de soupape d'admission (ΔEVH) et de la différence de phase de levée de soupape d'échappement (ΔAVH) à partir du point d'intersection commun déterminé (300) des lignes de mêmes amplitudes (111, 121) des fréquences de signal sélectionnées (Amp_SF_1...Amp_SF_X).

2. Procédé selon la revendication 1, **caractérisé en ce qu'**il comporte les étapes préalables suivantes :
- mesure d'un moteur à combustion interne de référence pour la détermination de lignes de référence de mêmes amplitudes (RL_Amp_1...X) de fréquences de signal sélectionnées (Amp_SF_1...Amp_SF_X) du signal de pulsations de pression dans le système d'admission et/ou d'échappement en fonction de la différence de phase de levée de soupape d'admission de référence et de la différence de phase de levée de soupape d'échappement de référence et
- mémorisation des lignes de référence (Sp_RL/Rf) de mêmes amplitudes des fréquences de signal sélectionnées (RL_Amp_1...X) du signal de pulsations de pression en fonction de la différence de phase de levée de soupape d'admission de référence et de la différence de phase de levée de soupape d'échappement de référence dans des cartographies de lignes de référence.

3. Procédé selon la revendication 2, **caractérisé en ce que** les cartographies de lignes de référence sont mémorisées dans une zone de mémoire (Sp_RL/Rf) d'un appareil de commande de moteur (50) du moteur à combustion interne de série concerné.

4. Procédé selon la revendication 2, **caractérisé en ce qu'**une fonction de modèle algébrique (Rf(Amp_1)...Rf (Amp_X)) est dérivée des cartographies de lignes de référence des fréquences de signal sélectionnées (Amp_SF_1...Amp_SF_X) du signal de pulsations de pression pour la fréquence de signal respective (Amp_SF_1...Amp_SF_X), laquelle fonction représente l'allure des lignes de référence respectives de mêmes amplitudes (RL_Amp_1...X) des fréquences de signal sélectionnées du signal de pulsations de pression en fonction de la différence de phase de levée de soupape d'admission de référence ainsi que de la différence de phase de levée de soupape d'échappement de référence.

5. Procédé selon la revendication 4, **caractérisé en ce que** les fonctions de modèle algébriques (Rf(Amp_1)...Rf (Amp_X)) pour les fréquences de signal sélectionnées sont mémorisées dans une zone de mémoire (SP_RL/Rf) d'un appareil de commande de moteur (50) du moteur à combustion interne de série concerné.

6. Procédé selon l'une des revendications précédentes, **caractérisé en ce que** la projection des lignes de mêmes amplitudes (111, 121) dans un plan commun défini par la différence de phase de levée de soupape d'admission (ΔEVH) et la différence de phase de levée de soupape d'échappement (ΔAVH) et la détermination du point d'intersection commun (300) de ces lignes s'effectuent sur la base de fonctions algébriques.

7. Procédé selon l'une des revendications 1 à 6, **caractérisé en ce que** le procédé est mis en œuvre sur un appareil de commande de moteur (50) programmable électronique du moteur à combustion interne de série concerné.

8. Procédé selon la revendication 7, **caractérisé en ce qu'**une adaptation de grandeurs de commande ou de routines de commande au sens d'une correction de la différence de phase de levée de soupape d'admission déterminée (ΔEVH) et de la différence de phase de levée de soupape d'échappement déterminée (ΔAVH) ou au sens d'une adaptation à celles-ci est effectuée sur l'appareil de commande de moteur (50).

9. Procédé selon l'une des revendications précédentes, **caractérisé en ce que** les fréquences de signal sélectionnées (Amp_SF_1...Amp_SF_X) comportent la fréquence d'admission et d'autres multiples de la fréquence d'admission du moteur à combustion interne.

10. Procédé selon l'une des revendications précédentes, **caractérisé en ce que** les pulsations de pression dynamiques de l'air d'admission sont mesurées à l'aide d'un capteur de pression (44) de série dans le collecteur d'admission du système d'admission d'air (20).

11. Procédé selon l'une des revendications précédentes, **caractérisé en ce que** le signal d'angle de phase de vilebrequin (KwPw) est déterminé à l'aide d'une roue dentée reliée au vilebrequin (9) et d'un capteur de Hall.
